# FASCICULE DE BREVET EUROPEEN

(11) **EP 2 683 841 B1**
(45) Date de publication et mention de la délivrance du brevet: **30.10.2019**
(21) Numéro de dépôt: 11706844.5
(22) Date de dépôt: 08.03.2011
(51) Int. Cl.: C22C 32/00, A44C 27/00, C04B 41/51, B22D 19/00, C04B 41/88, C04B 41/00, C04B 41/45, C22C 5/02

(54) **MATERIAU COMPOSITE COMPRENANT UN METAL PRECIEUX, PROCEDE DE FABRICATION ET UTILISATION D'UN TEL MATERIAU**
VERBUNDMATERIAL MIT EINEM EDELMETALL, HERSTELLUNGSVERFAHREN UND VERWENDUNG EINES DERARTIGEN MATERIALS
COMPOSITE MATERIAL COMPRISING A PRECIOUS METAL, MANUFACTURING PROCESS AND USE OF SUCH A MATERIAL

(43) Date de publication de la demande: 15.01.2014
(73) Titulaire: HUBLOT SA, 1260 Nyon (CH)
(72) Inventeur: HASANOVIC, Senad, CH-1018 Lausanne (CH); MORTENSEN, Andreas, CH-1113 St-Saphorin/Morges (CH); WEBER, Ludger, CH-1052 Le Mont /s Lausanne (CH); TAVANGAR, Reza, 14716-85963 Teheran (IR)
(74) Mandataire: Cabinet Plasseraud
(86) Numéro de dépôt international: PCT/EP2011/053494
(87) Numéro de publication internationale: WO 2012/119647

(56) Documents cités:
- DE-C1- 19 953 780
- IT-A1- RM 960 348
- US-A- 5 983 973
- US-B2- 7 608 127

## Description

### DOMAINE DE L'INVENTION

L'invention concerne les matériaux composites comprenant des métaux précieux, leur procédé de fabrication et leurs utilisations.

### ARRIERE-PLAN DE L'INVENTION

Le document US-7 608 127 décrit des matériaux composites constitués d'une matrice métallique de métal précieux ou d'alliage de métal précieux, renforcée par un matériau de remplissage en carbure de tungstène ou carbure de molybdène. Lors de sa fabrication, ce matériau composite est obtenu par infiltration du métal liquide, sans pression, dans une préforme de carbure de tungstène ou carbure de molybdène. Le matériau composite décrit dans ce document peut présenter une teneur en métal allant de 56 à 75 % en poids, et une dureté supérieure à 171 HV, éventuellement dépassant les 500 HV.

Le document ITRM960348 décrit que des couches d'une composition matricielle en or et d'une phase dispersée en carbure de bore B4C à fraction volumétrique élevée sont obtenues par trempage électrolytique contenant une faible charge des particules de carbure de bore.

Le document US5983973 décrit un procédé dans lequel une matière fondue est infiltrée dans une préforme à matrice métallique, dans un moule maintenu sous vide.

Le document US2008176063 décrit des composites à matrice de métal noble comprenant un matériau de remplissage renforcé par des particules, tel qu'un carbure.

### OBJET ET RESUME DE L'INVENTION

La présente invention a notamment pour but de proposer un nouveau matériau composite présentant des caractéristiques au moins aussi avantageuses, voire meilleures, que l'art antérieur décrit ci-dessus.

A cet effet, l'invention propose un matériau composite combinant :
- un métal précieux ou un alliage contenant un métal précieux (l'alliage en question peut par exemple être un alliage de métaux précieux entre eux et/ou avec d'autres métaux tels que l'aluminium, le cuivre et le titane),
- et une céramique à base de bore ayant un point de fusion supérieur à celui dudit métal précieux et une densité au plus égale à 4 g/cm³, la céramique formant une phase continue, interconnectée, dans laquelle est infiltré le métal précieux.

On obtient ainsi un matériau composite de faible masse volumique grâce au choix de la céramique à base de bore, et de grande dureté. Malgré la très faible mouillabilité des céramiques à base de bore, le matériau composite peut être réalisé notamment par infiltration de métal liquide sous pression.

Dans divers modes de réalisation du matériau composite selon l'invention, on peut avantageusement avoir recours en outre à l'une et/ou à l'autre des dispositions suivantes :
- le matériau composite présente une teneur en métal précieux supérieure à 75 % en poids par rapport au poids total dudit matériau ;
- ledit métal précieux est choisi parmi : l'or, le platine, le palladium et l'argent ;
- ledit métal précieux est l'or ;
- la céramique est combinée à un alliage d'or et d'aluminium, le matériau composite présentant une teneur en aluminium au plus égale à 20 % en poids par rapport au poids total du matériau composite, de préférence au plus égale à 5 % en poids par rapport au poids total du matériau composite ;
- le métal précieux est allié à du titane, la teneur en titane étant comprise entre 0,5% et 2% en poids par rapport au poids total du matériau composite, avantageusement environ 1% en poids par rapport au poids total du matériau composite, ce qui facilite l'infiltration du métal précieux ou de l'alliage dans la céramique ;
- ladite céramique est choisie parmi : un carbure de bore, un nitrure de bore, un oxyde de bore et un hétérodiamant BCN;
- ladite céramique est choisie parmi les carbures de bore ayant comme formule approximative B₄C, B₁₃C₂ et B₁₂C₃ ;
- ladite céramique est un nitrure de bore de formule BN, choisi parmi : le nitrure de bore cubique, le nitrure de bore de structure cristalline type wurtzite, le nitrure de bore hexagonal ;
- ladite céramique est l'oxyde de bore B₆O ;
- ladite céramique est du BC₂N cubique ;
- ladite céramique est conductrice de l'électricité, ce qui permet d'usiner le matériau composite par électroérosion ;
- le matériau présente une dureté supérieure à 320 HV, de préférence supérieure à 400 HV ;
- la céramique représente une fraction volumique comprise entre 55 et 80 % dudit matériau ;
- la céramique est sous forme de particules discrètes ayant un diamètre équivalent compris entre 0,1 µm et 1 mm, de préférence compris entre 1 µm et 100 µm ;
- le matériau composite présente une masse volumique comprise entre 7 et 14 g/cm³.

Par ailleurs, l'invention a également pour objet un procédé pour fabriquer un matériau composite tel que défini ci-dessus, ledit procédé comportant une étape d'infiltration dans laquelle le métal précieux ou l'alliage est infiltré sous une pression de 10 à 200 bar, préférentiellement de 75 à 150 bar, dans une préforme poreuse constituée de ladite céramique formant une phase continue, interconnectée.

Comme indiqué ci-dessus, l'infiltration sous pression permet d'infiltrer le métal dans la céramique à base de bore, malgré la très faible mouillabilité de ce type de céramique. De plus, on obtient ainsi un matériau composite sensiblement sans porosité.

Dans divers modes de réalisation du procédé selon l'invention, on peut avoir recours en outre à l'une et/ou à l'autre des dispositions suivantes :
- lors de l'étape d'infiltration, un alliage d'or et d'aluminium sous forme liquide est infiltré sous pression dans une préforme poreuse de carbure de bore ;
- le procédé comprend en outre, avant l'étape d'infiltration, une étape de frittage au cours de laquelle la préforme de céramique est au moins partiellement frittée.

Enfin, l'invention a également pour objet une utilisation d'un matériau composite tel que défini ci-dessus en horlogerie ou joaillerie.

### BREVE DESCRIPTION DES DESSINS

D'autres caractéristiques et avantages de l'invention apparaîtront au cours de la description suivante d'une de ces formes de réalisation, donnée en regard des dessins joint, sur lesquels :
- la figure 1 est une illustration schématique d'un exemple de procédé de fabrication d'un matériau composite selon une forme de réalisation de l'invention,
- et la figure 2 est une photographie d'une coupe cristallographique montrant un matériau composite selon une forme de réalisation de l'invention.

### DESCRIPTION PLUS DETAILLEE

Comme expliqué ci-dessus, l'invention a pour concerne un matériau composite combinant :
- un métal précieux (notamment : l'or, le platine, le palladium ou l'argent) ou un alliage contenant un métal précieux,
- et une céramique à base de bore ayant un point de fusion supérieur à celui dudit métal précieux et une densité au plus égale à 4 g/cm³ (avantageusement inférieure à 3,5 g/cm³).

Concernant les alliages susmentionnés, il peut s'agir notamment :
- d'un alliage d'or et d'aluminium, le matériau composite présentant une teneur en aluminium au plus égale à 20 % en poids par rapport au poids total du matériau composite, de préférence au plus égale à 5 % en poids par rapport au poids total du matériau composite ;
- d'alliages comprenant au moins un métal précieux et au moins du titane, pour faciliter l'infiltration du métal dans la céramique (la teneur en titane étant comprise entre 0,5% et 2% en poids par rapport au poids total du matériau composite, avantageusement environ 1% en poids par rapport au poids total du matériau composite),
- d'alliages comprenant au moins un métal précieux et au moins du cuivre.

Le matériau composite peut présenter une teneur en métal précieux supérieure à 75 % en poids par rapport au poids total dudit matériau, par exemple de l'ordre de 80 %.

Les céramiques techniques dont il est question ici, sont des matériaux durs, réfractaires, légers et très stables chimiquement. Leur point de fusion est généralement au dessus de 2000 degrés Celsius. Les céramiques utilisables dans le cadre de la présente invention comprennent notamment :
- les carbures de bore ayant comme formule approximative B₄C, B₁₃C₂ et B₁₂C₃ (point de fusion : 2450 °C, masse volumique 2,48 - 2,51 g/cm³),
- les nitrures de bore BN (masse volumique : environ 3,5 g/cm3), notamment le nitrure de bore cubique (point de fusion : 2970 °C), le nitrure de bore de structure cristalline type wurtzite (point de fusion : 1700 °C), le nitrure de bore hexagonal (point de fusion : environ 2500 °C),
- certains oxydes de bore, notamment l'oxyde de bore B₆O (point de fusion : supérieure à 2000 °C),
- certains composés BCN, notamment du BC₂N cubique (point de fusion supérieur à 2000 °C).

La céramique peut représenter une fraction volumique comprise entre 55 et 80 % du matériau. Elle peut être sous forme de particules discrètes ayant un diamètre équivalent compris entre 0,1 µm et 1 mm, de préférence compris entre 1 µm et 100 µm. Il peut être avantageux d'avoir des particules de tailles variées dans le même matériau, pour obtenir notamment un effet visuel pailleté.

Lorsque le procédé de préparation du composite selon l'invention comprend une étape de frittage, la céramique forme alors une phase continue, dans laquelle les grains de céramique sont interconnectés. La céramique choisie sera de préférence suffisamment conductrice de l'électricité, pour permettre un usinage par électroérosion. C'est le cas en particulier du carbure de bore de formule statistique B₄C. On peut ainsi aisément usiner le matériau composite malgré son extrême dureté.

On obtient ainsi un matériau à la fois léger (de faible masse volumique) et très dur donc quasiment inrayable, présentant une dureté supérieure à 320 HV, de préférence supérieure à 400 HV, voire bien au-delà. Cette dernière propriété est particulièrement intéressante notamment pour l'utilisation du matériau composite en horlogerie ou joaillerie.

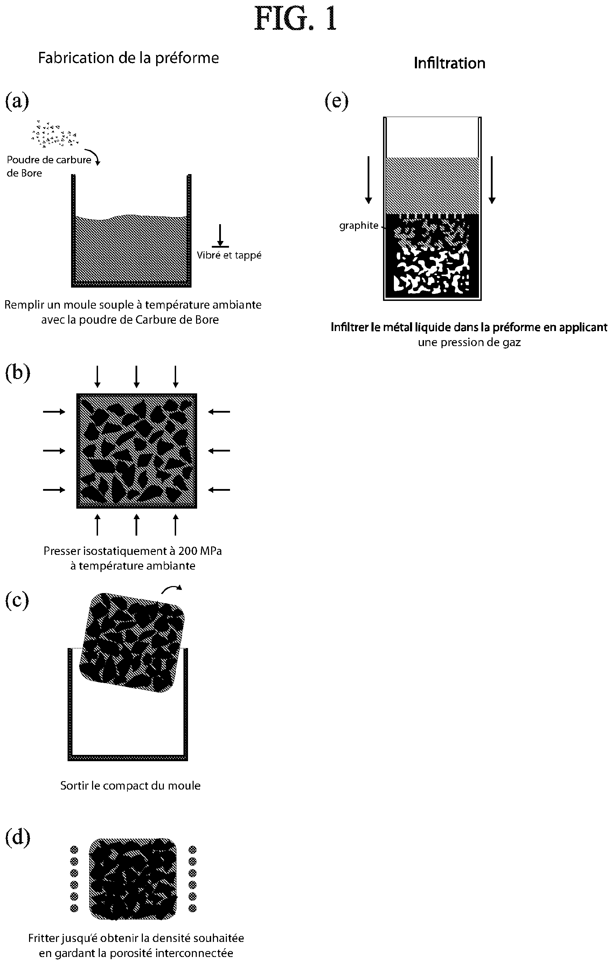

On peut réaliser le matériau décrit ci-dessous notamment par le procédé illustré sur la figure 1, comprenant les étapes suivantes :
- fabrication d'une préforme de céramique poreuse notamment par frittage,
- infiltration sous pression du métal précieux ou de l'alliage dans la préforme de céramique.

### Exemple

Une poudre commerciale de carbure de bore F1000 (taille de particules de 5 pm), de formule statistique B₄C, a été compactée à froid à 200 MPa de pression isostatique (figure 1, étapes (a) à (c)) puis frittée à 2100° C dans un four sous vide pendant 1 heure (figure 1, étape(d)).

La densité de la préforme frittée est de 1.766 g/cm³ et la densité de la poudre est de 2.48 g/cm³. Ainsi, la préforme est dense à 71,19%, laissant 28.81% de porosité.

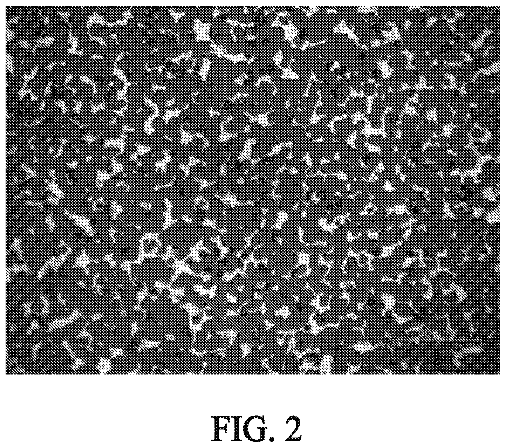

De l'or pur est ensuite infiltré dans la préformé frittée à une température de 1200 °C sous 150 bar de pression de gaz (argon) (figure 1, étape (e)).
Le matériau obtenu est un composite à matrice métallique ayant une densité de 7.48 g/cm³. La teneur en or pur du composite est supérieure à 76% massique et sa dureté est comprise entre 650 et 700 Vickers (30N de charge, 16 secondes). La coupe cristallographique représentée à la figure 2 a été réalisée en microscopie optique, agrandissement X 50, sur un échantillon dudit composite poli par des particules de diamant jusqu'à 0,25 µm. Les zones claires correspondent au métal infiltré dans la céramique.

## Revendications

1. Matériau composite combinant :
- un métal précieux ou un alliage contenant un métal précieux,
- et une céramique à base de bore ayant un point de fusion supérieur à celui dudit métal précieux et une densité au plus égale à 4 g/cm³, la céramique formant une phase continue, interconnectée dans laquelle est infiltré le métal précieux.

2. Matériau composite selon la revendication 1, présentant une teneur en métal précieux supérieure à 75 % en poids par rapport au poids total dudit matériau.

3. Matériau composite selon l'une quelconque des revendications 1 et 2, dans lequel ledit métal précieux est choisi parmi : l'or, le platine, le palladium et l'argent.

4. Matériau composite selon la revendication 3, dans lequel ledit métal précieux est l'or.

5. Matériau composite selon l'une quelconque des revendications précédentes, dans lequel la céramique est combinée à un alliage d'or et d'aluminium, le matériau composite présentant une teneur en aluminium au plus égale à 20 % en poids par rapport au poids total du matériau composite, de préférence au plus égale à 5 % en poids par rapport au poids total du matériau composite.

6. Matériau composite selon l'une quelconque des revendications précédentes, dans lequel le métal précieux est allié à du titane, la teneur en titane étant comprise entre 0,5% et 2% en poids par rapport au poids total du matériau composite, avantageusement environ 1% en poids par rapport au poids total du matériau composite.

7. Matériau composite selon l'une quelconque des revendications précédentes, dans lequel ladite céramique est choisie parmi : un carbure de bore, un nitrure de bore, un oxyde de bore et un hétérodiamant BCN.

8. Matériau composite selon la revendication 7, dans lequel ladite céramique est choisie parmi les carbures de bore ayant comme formule approximative B₄C, B₁₃C₂ et B₁₂C₃.

9. Matériau composite selon la revendication 7, dans lequel ladite céramique est le nitrure de bore de formule BN, choisi parmi : le nitrure de bore cubique, le nitrure de bore de structure cristalline type wurtzite, le nitrure de bore hexagonal.

10. Matériau composite selon la revendication 7, dans lequel ladite céramique est l'oxyde de bore B₆O.

11. Matériau composite selon la revendication 7, dans lequel ladite céramique est du BC₂N cubique.

12. Matériau selon l'une quelconque des revendications précédentes, dans lequel ladite céramique est conductrice de l'électricité.

13. Matériau composite selon l'une quelconque des revendications précédentes, présentant une dureté supérieure à 320 HV, de préférence supérieure à 400 HV.

14. Matériau composite selon l'une quelconque des revendications précédentes, dans lequel la céramique représente une fraction volumique comprise entre 55 et 80 % dudit matériau.

15. Matériau composite selon l'une quelconque des revendications précédentes, dans lequel la céramique est sous forme de particules discrètes ayant un diamètre équivalent compris entre 0,1 µm et 1 mm, de préférence compris entre 1 µm et 100 µm.

16. Matériau composite selon l'une quelconque des revendications précédentes, présentant une masse volumique comprise entre 7 et 14 g/cm³

17. Procédé pour fabriquer un matériau composite selon l'une quelconque des revendications précédentes, ledit procédé comportant une étape d'infiltration dans lequel le métal précieux ou l'alliage est infiltré sous une pression de 10 à 200 bar, préférentiellement de 75 à 150 bar, dans une préforme poreuse constituée de ladite céramique formant une phase continue, interconnectée.

18. Procédé selon la revendication 17, dans lequel, lors de l'étape d'infiltration, un alliage d'or et d'aluminium sous forme liquide est infiltré sous pression dans une préforme poreuse de carbure de bore.

19. Procédé selon la revendication 17 ou la revendication 18, comprenant en outre, avant l'étape d'infiltration, une étape de frittage au cours de laquelle la préforme de céramique est au moins partiellement frittée.

20. Utilisation d'un matériau composite selon l'une quelconque des revendications 1 à 16, en horlogerie ou joaillerie.

## Patentansprüche

1. Verbundmaterial kombinierend:
- ein Edelmetall oder eine Legierung, die ein Edelmetall enthält,
- und eine Keramik auf Basis von Bor, das einen höheren Schmelzpunkt als den des Edelmetalls und eine Dichte von höchstens gleich 4 g/cm³ hat, wobei die Keramik eine zusammenhängende, kontinuierliche Phase bildet, in welche das Edelmetall infiltriert ist.

2. Verbundmaterial nach Anspruch 1, aufweisend einen Gehalt an Edelmetall von mehr als 75 Gewichtsprozent bezogen auf das Gesamtgewicht des Materials.

3. Verbundmaterial nach einem der Ansprüche 1 und 2, in welchem das Edelmetall ausgewählt ist aus: Gold, Platin, Palladium und Silber.

4. Verbundmaterial nach Anspruch 3, in welchem das Edelmetall Gold ist.

5. Verbundmaterial nach einem der vorstehenden Ansprüche, in welchem die Keramik mit einer Legierung aus Gold und Aluminium kombiniert ist, wobei das Verbundmaterial einen Gehalt an Aluminium von höchstens gleich 20 Gewichtsprozent bezogen auf das Gesamtgewicht des Verbundmaterials, vorzugsweise höchstens gleich 5 Gewichtsprozent bezogen auf das Gesamtgewicht des Verbundmaterials hat.

6. Verbundmaterial nach einem der vorstehenden Ansprüche, in welchem das Edelmetall mit Titan legiert ist, wobei der Gehalt an Titan zwischen 0,5 und 2 Gewichtsprozent bezogen auf das Gesamtgewicht des Verbundmaterials, vorzugsweise ungefähr 1 Gewichtsprozent bezogen auf das Gesamtgewicht des Verbundmaterials beträgt.

7. Verbundmaterial nach einem der vorstehenden Ansprüche, in welchem die Keramik ausgewählt ist aus: einem Borcarbid, einem Bornitrid, einem Boroxid und einem BCN-Heterodimant.

8. Verbundmaterial nach Anspruch 7, in welchem die Keramik aus den Borcarbiden ausgewählt ist, deren ungefähre Formel B₄C, B₁₃C₂ und B₁₂C₃ ist.

9. Verbundmaterial nach Anspruch 7, in welchem die Keramik das Bornitrid der Formel BN ist, ausgewählt aus dem kubischen Bornitrid, dem Bornitrid mit kristalliner Struktur des Wurtzit-Typs und dem hexagonalen Bornitrid.

10. Verbundmaterial nach Anspruch 7, in welchem die Keramik das Boroxid B₆O ist.

11. Verbundmaterial nach Anspruch 7, in welchem die Keramik kubisches BC₂N ist.

12. Verbundmaterial nach einem der vorstehenden Ansprüche, in welchem die Keramik elektrisch leitend ist.

13. Verbundmaterial nach einem der vorstehenden Ansprüche, aufweisend einen Härtegrad von mehr als 320 HV, vorzugsweise mehr als 400 HV.

14. Verbundmaterial nach einem der vorstehenden Ansprüche, in welchem die Keramik einen Volumenanteil zwischen 55 und 80% des Materials hat.

15. Verbundmaterial nach einem der vorstehenden Ansprüche, in welchem die Keramik in Form von einzelnen Partikeln ist, die einen Äquivalentdurchmesser zwischen 0,1 µm und 1 mm, vorzugsweise zwischen 1 µm und 100µm, haben.

16. Verbundmaterial nach einem der vorstehenden Ansprüche, aufweisend eine Volumenmasse (Dichte) zwischen 7 und 14 g/cm³.

17. Verfahren zur Herstellung eines Verbundmaterials nach einem der vorstehenden Ansprüche, wobei das Verfahren einen Infiltrationsschritt aufweist, in welchem das Edelmetall oder die Legierung unter einem Druck von 10 bis 200 Bar, vorzugsweise von 75 bis 150 Bar, in einen porösen Vorformling, der aus der Keramik besteht, die eine zusammenhängende, kontinuierliche Phase bildet, infiltriert wird.

18. Verfahren nach Anspruch 17, in welchem bei dem Infiltrationsschritt eine Legierung aus Gold und Aluminium in flüssiger Form unter Druck in einen porösen Borcarbid-Vorformling infiltriert wird.

19. Verfahren nach Anspruch 17 oder Anspruch 18, ferner aufweisend vor dem Infiltrationsschritt einen Sinterschritt, im Verlaufe dessen der keramische Vorformling mindestens teilweise gesintert wird.

20. Verwendung eines Verbundmaterials nach einem der Ansprüche 1 bis 16 bei der Herstellung von Uhren oder Schmuck.

## Claims

1. Composite material combining:
- a precious metal or an alloy containing a precious metal;
- and a boron-based ceramic with a melting point greater than that of said precious metal and a density at most equal to 4 g/cm³, the ceramic forming a continuous, interconnected phase in which the precious metal is infiltrated.

2. Composite material according to claim 1, having a concentration of precious metal greater than 75% by weight of the total weight of said material.

3. Composite material according to any of claims 1 and 2, in which said precious metal is chosen from among: gold, platinum, palladium, and silver.

4. Composite material according to claim 3, in which said precious metal is gold.

5. Composite material according to any of the previous claims, in which the ceramic is combined with an alloy of gold or aluminum, the composite material having a concentration of aluminum at most equal to 20% by weight of the total weight of the composite material, preferably at most equal to 5% by weight of the total weight of the composite material.

6. Composite material according to any of the previous claims, in which the precious metal is alloyed to titanium, the concentration of titanium being comprised between 0.5 and 2% of the total weight of the composite material, preferably approximately 1% by weight of the total weight of the composite material.

7. Composite material according to any of the previous claims, in which said ceramic is chosen from among: a boron carbide, a boron nitride, a boron oxide, and a BCN heterodiamond.

8. Composite material according to claim 7, in which said ceramic is chosen from among the boron carbides having as an approximate formula B₄C, B₁₃C₂, and B₁₂C₃.

9. Composite material according to claim 7, in which said ceramic is boron nitride having the formula BN, chosen from among: cubic boron nitride, boron nitride with a Wurtzite type crystalline structure, hexagonal boron nitride.

10. Composite material according to claim 7, in which said ceramic is boron oxide B₆O.

11. Composite material according to claim 7, in which said ceramic is cubic BC₂N.

12. Material according to any of the previous claims, in which said ceramic is an electrical conductor.

13. Composite material according to any of the previous claims, having a hardness greater than 320 VHN, preferably greater than 400 VHN.

14. Composite material according to any of the previous claims, in which the ceramic represents a volume fraction comprised between 55 and 80% of said material.

15. Composite material according to any of the previous claims, in which the ceramic is in the form of discrete particles having an equivalent diameter comprised between 0.1 µm and 1 mm, preferably comprised between 1 µm and 100 µm.

16. Composite material according to any of the previous claims, presenting a density comprised between 7 and 14 g/cm³.

17. Process for manufacturing a composite material according to any of the previous claims, said process having an infiltration step in which the precious metal or alloy is infiltrated under a pressure of 10 to 200 bar, preferably from 75 to 150 bar, in a porous preform consisting of said ceramic forming a continuous, interconnected phase.

18. Process according to claim 17, in which, during the infiltration step, an alloy of gold and aluminum in liquid form is infiltrated under pressure in a porous preform of boron carbide.

19. Process according to claim 17 or claim 18, also comprising, prior to the infiltration step, a sintering step during which the ceramic preform is at least partially sintered.

20. Use of a composite material according to any of claims 1 to 16, in clock making or jewelry making.
